# FASCICULE DE BREVET EUROPEEN

(11) **EP 3 020 110 B1**
(45) Date de publication et mention de la délivrance du brevet: **09.08.2017**
(21) Numéro de dépôt: 14747068.6
(22) Date de dépôt: 30.06.2014
(51) Int. Cl.: H02J 1/00, F02N 11/08, H02J 7/00

(54) **PROCEDE ET SYSTEME DE STABILISATION D'UNE TENSION D'ALIMENTATION D'UN RESEAU ELECTRIQUE DE BORD D'UN VEHICULE AUTOMOBILE**
VERFAHREN UND SYSTEM ZUR STABILISIERUNG DER VERSORGUNGSSPANNUNG EINES BORDNETZES EINES KRAFTFAHRZEUGS
METHOD AND SYSTEM FOR STABILISING A SUPPLY VOLTAGE OF AN ON-BOARD ELECTRICAL SYSTEM OF A MOTOR VEHICLE

(30) Priorité: 12.07.2013 FR 1356865
(43) Date de publication de la demande: 18.05.2016
(73) Titulaire: Valeo Equipements Electriques Moteur, 94046 Créteil Cedex (FR)
(72) Inventeur: CHIAPPORI, Guido, F-59000 Lille (FR); CHEMIN, Michaël, F-94510 La Queue en Brie (FR); DELARUE, Philippe, F- 59655 Villeneuve d'Ascq Cedex (FR); LE MOIGNE, Philippe, F-59651 Villeneuve d'Ascq Cedex (FR)
(74) Mandataire: Novembre, Christophe Adelphe
(86) Numéro de dépôt international: PCT/FR2014/051665
(87) Numéro de publication internationale: WO 2015/004367

(56) Documents cités:
- WO-A2-2012/038258
- DE-A1-102010 039 875

## Description

### DOMAINE TECHNIQUE DE L'INVENTION.

De manière générale, l'invention concerne le domaine des démarreurs de moteurs thermiques dans les véhicules automobiles. Plus particulièrement, l'invention concerne un procédé et un système de stabilisation d'une tension d'alimentation d'un réseau électrique de bord du véhicule au moment du démarrage.

### ARRIERE PLAN TECHNOLOGIQUE DE L'INVENTION.

Lors de la mise sous tension d'un démarreur pour assurer le démarrage du moteur thermique du véhicule, il se produit un courant d'appel important qui est proche du niveau de courant de court-circuit du démarreur, à savoir, un courant de l'ordre de 1000 ampères. Ce courant décroît ensuite en intensité à mesure que l'induit du démarreur, correspondant au rotor de la machine, monte en vitesse.

A ce pic initial de courant correspond une chute conséquente de la tension aux bornes de la batterie. D'autres chutes de tension moins importantes se produisent ensuite pendant la phase de démarrage et correspondent à des passages par des points morts hauts successifs du moteur thermique.

Le développement de démarreurs dits « renforcés » adaptés pour des systèmes d'arrêt/ relance automatique du moteur thermique (systèmes dits « Stop/Start » ou « Stop & Go » en terminologie anglaise) imposent aujourd'hui de nouvelles contraintes aux équipementiers automobiles, relatives au respect de seuils de tension minima de la batterie lors de l'appel de courant à la mise sous tension du démarreur. Ainsi, dans leurs cahiers de charges, les constructeurs automobiles définissent un premier seuil de tension compris habituellement entre 7 et 9 volts en dessous duquel ne doit pas descendre la tension de batterie. Pour les chutes de tension suivantes, correspondant aux points morts hauts du moteur thermique, la tension de batterie doit rester supérieure à un second seuil de tension compris habituellement entre 8 et 9 volts. Pendant le démarrage du moteur thermique, la tension du réseau de bord du véhicule reste ainsi à une valeur suffisante pour garantir le fonctionnement attendu des équipements des véhicules.

Les démarreurs renforcés ont généralement une puissance supérieure aux démarreurs classiques de manière à obtenir un démarrage rapide pour davantage de confort des utilisateurs. Il en découle un courant d'appel à la mise sous tension plus élevé et donc une première chute de la tension de batterie qui va au-delà des valeurs habituelles et cela en regard d'exigences élevées.

Ce problème de la chute de tension devient encore plus important dans le cas d'un véhicule équipé d'un système « Stop/Start ». Du fait de la fréquence élevée des redémarrages par rapport au démarrage initial d'un véhicule classique, les occupants du véhicule peuvent subir une gêne, et, de plus, la sécurité de certains équipements, comme une direction assistée, peut être compromise.

Dans la technique antérieure, des solutions ont été proposées au problème exposé ci-dessus.

Une première solution très utilisée, divulguée par la société VALEO EQUIPEMENTS ELECTRIQUES MOTEUR dans la demande de brevet FR2843841, consiste à connecter des condensateurs, ou tout autre source de tension secondaire, en série avec la batterie pendant le démarrage pour augmenter la tension d'alimentation du démarreur, et ainsi stabiliser la tension du réseau de bord.

Une solution analogue connue de l'entité inventive repose sur l'utilisation de convertisseurs électroniques élévateurs de tension afin d'éviter un niveau de tension trop bas sur le réseau de bord.

L'inconvénient majeur de ces condensateurs, convertisseurs, ou sources de tensions secondaires, réside dans les surcoûts substantiels qu'ils introduisent.

Une autre solution connue propose de commander le démarreur au moyen de deux relais, une temporisation et une résistance de limitation de courant. Dans une première phase de fonctionnement dont la durée est déterminée par la temporisation, une résistance additionnelle est insérée en série dans le circuit électrique de puissance du démarreur et limite le pic de courant initial. Dans une seconde phase de fonctionnement, la résistance additionnelle est sortie du circuit de puissance afin de permettre le passage d'un courant suffisant dans l'induit du démarreur et d'autoriser une montée en vitesse de celui-ci.

Outre l'inconvénient du coût additionnel qu'implique le relais de commande supplémentaire, la temporisation et la résistance de limitation de courant, l'introduction de ce relais supplémentaire, qui comporte des pièces mécaniques mobiles soumises à usure, a un impact négatif sur la tenue du démarreur en termes de nombre de cycles de démarrage que doit pouvoir supporter sans encombre le démarreur. La tenue du démarreur en nombre de cycles de démarrage est une contrainte particulièrement sévère pour les démarreurs destinés à des systèmes Stop/ Start. En effet, il est demandé à de tels démarreurs de tenir environ 300 000 cycles de démarrage, soit dix fois plus que les 30 000 cycles environ demandés aux démarreurs classiques.

Il a également été proposé de connecter un interrupteur constitué d'un transistor de puissance fonctionnant en commutation en série avec le démarreur. Le dispositif de commande du transistor mesure la tension de la batterie, et, en fonction de sa valeur, ouvre ou ferme l'interrupteur. L'interrupteur est commuté à l'état ouvert périodiquement, chaque fois que la tension de batterie chute en dessous d'une tension de référence.

Le principal inconvénient de cette solution est la commutation du courant générant des pics de tension inverse importants qui peuvent endommager la batterie.

De plus, un autre problème majeur est la compatibilité électromagnétique (CEM) du fait de la commutation de courants à des niveaux élevés.

Plus récemment la société VALEO EQUIPEMENTS ELECTRIQUES MOTEUR a proposé l'utilisation d'un filtre passe-bas pour restreindre l'appel de courant au démarrage et limiter ainsi la chute de tension.

Tel que cela est décrit dans la demande de brevet FR2978499, le principe de cette solution est un filtre inductif de grande puissance couplé à un circuit magnétique, connecté en série avec le moteur du démarreur.

Un inconvénient de ce filtre est que ses caractéristiques doivent être adaptées au modèle de démarreur utilisé. De plus, le circuit magnétique, qui présente un noyau ayant aussi une certaine masse, ne limite le courant qu'à une valeur imprécise, et, de ce fait, la tension de la batterie peut tomber en dessous de la valeur nominale.

Au vu de ces diverses solutions connues, il existe donc un besoin pour en supprimer les inconvénients, ou du moins, de les atténuer. On identifiera enfin le document WO 2012/038258 A2 qui décrit un système de stabilisation d'une tension d'alimentation d'un réseau électrique de bord d'un véhicule automobile mais où, dans les termes des présentes revendications, l'élément résistif est connecté en parallèle et non en série. Ainsi, ledit élément a des valeurs prédéterminées qui ne sont pas proportionnelles aux premiers termes d'une série harmonique.

### DESCRIPTION GENERALE DE L'INVENTION.

La présente invention vise donc un procédé de stabilisation d'une tension d'alimentation d'un réseau électrique de bord d'un véhicule automobile.

Le procédé dont il s'agit est du type de ceux limitant une variation de tension d'une batterie alimentant le réseau électrique de bord au moment d'un démarrage d'un moteur thermique du véhicule au moyen d'un démarreur électrique relié à ce réseau.

Conformément à l'invention, le procédé prévoit de connecter en série avec la batterie et le démarreur un élément résistif présentant une résistance choisie en fonction de la variation de tension parmi un ensemble discret de valeurs prédéterminées, ces valeurs prédéterminées étant proportionnelles à un nombre prédéterminé des premiers termes d'une série harmonique.

Le procédé selon l'invention consiste alors avantageusement à former cet élément résistif par un composant résistif de résistance élémentaire prédéterminée ou par un nombre variable d'exemplaires identiques de ce composant résistif connectés en parallèle, ce nombre variable étant fonction de la variation de tension et au plus égal au nombre prédéterminé de termes de la série harmonique.

Une variante du procédé fort avantageuse consiste à mettre en oeuvre le nombre prédéterminé d'exemplaires identiques d'un composant résistif de résistance élémentaire prédéterminée, et à former l'élément résistif en connectant alternativement en parallèle un nombre variable de ces exemplaires, le nombre variable étant fonction de la variation de tension et au plus égal au nombre prédéterminé de termes de la série harmonique.

L'invention concerne aussi un système de stabilisation d'une tension d'alimentation d'un réseau électrique de bord d'un véhicule automobile.

Le système dont il s'agit est du type de ceux limitant une variation de tension d'une batterie alimentant le réseau au moment d'un démarrage d'un moteur thermique du véhicule au moyen d'un démarreur électrique relié à ce réseau et apte à la mise en oeuvre du procédé décrit ci-dessus.

Le système selon l'invention est remarquable en ce qu'il comprend un élément résistif connecté en série avec la batterie et le démarreur et présentant une résistance variant par pas en fonction de la variation de tension.

De préférence, cet élément résistif est constitué de plusieurs composants résistifs identiques et de plusieurs interrupteurs, chacun des composants résistifs étant connecté en série avec chacun des interrupteurs en formant un nombre prédéterminé de bras connectés en parallèle.

Le système de stabilisation comprend en outre avantageusement des moyens de commande de ces interrupteurs en fonction de la variation de tension.

De préférence les bras de l'élément résistif sont formés par des transistors de puissance fonctionnant en commutation et pilotés par ces moyens de commande.

Ces moyens de commande génèrent avantageusement des signaux de commande présentant des rapports cycliques multiples de l'inverse du nombre prédéterminé.

L'invention concerne aussi un démarreur de véhicule automobile remarquable en ce qu'il comporte un système de stabilisation d'une tension d'alimentation d'un réseau électrique de bord présentant les caractéristiques ci-dessus intégré.

Ces quelques spécifications essentielles auront rendu évidents pour l'homme de métier les avantages du système de stabilisation d'une tension d'alimentation d'un réseau électrique de bord d'un véhicule automobile selon l'invention par rapport à l'état de la technique.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

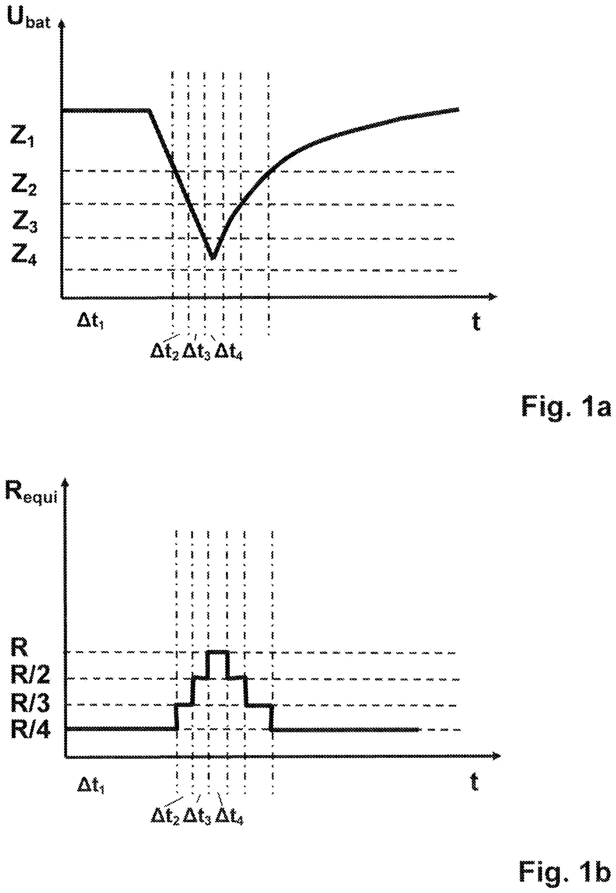

La **Figure 1a** montre un exemple d'évolution au cours du temps de la tension d'une batterie alimentant un réseau électrique de bord de véhicule automobile au moment du lancement du démarreur, et la **Figure 1b** montre l'évolution correspondante de la résistance d'un élément résistif connecté en série avec le démarreur selon le procédé de stabilisation d'une tension d'alimentation d'un réseau électrique de bord d'un véhicule automobile de l'invention.

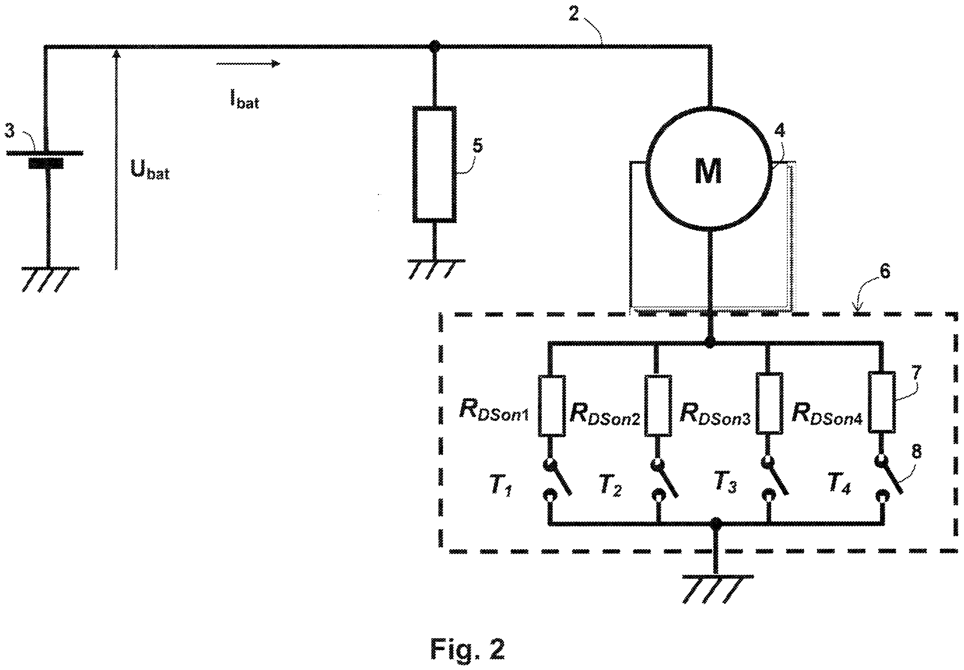

La **Figure 2** est un schéma simplifié d'un réseau électrique de bord montrant cet élément résistif aux fins d'illustrer le procédé de stabilisation d'une tension d'alimentation d'un réseau électrique de bord d'un véhicule automobile selon l'invention.

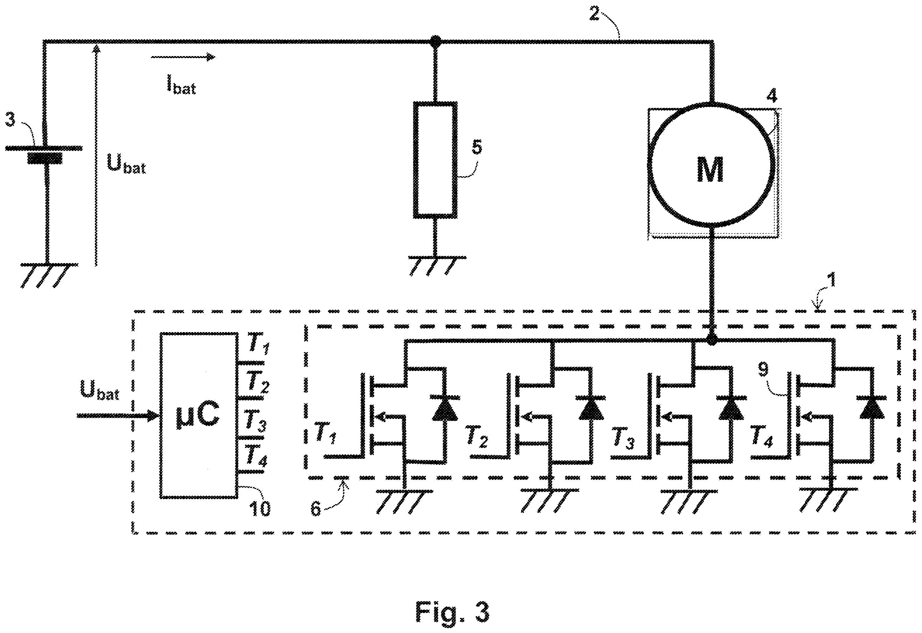

La **Figure 3** est un schéma simplifié d'un réseau électrique de bord montrant en détail cet élément résistif dans un mode préféré de réalisation du système de stabilisation d'une tension d'alimentation d'un réseau électrique de bord d'un véhicule automobile selon l'invention

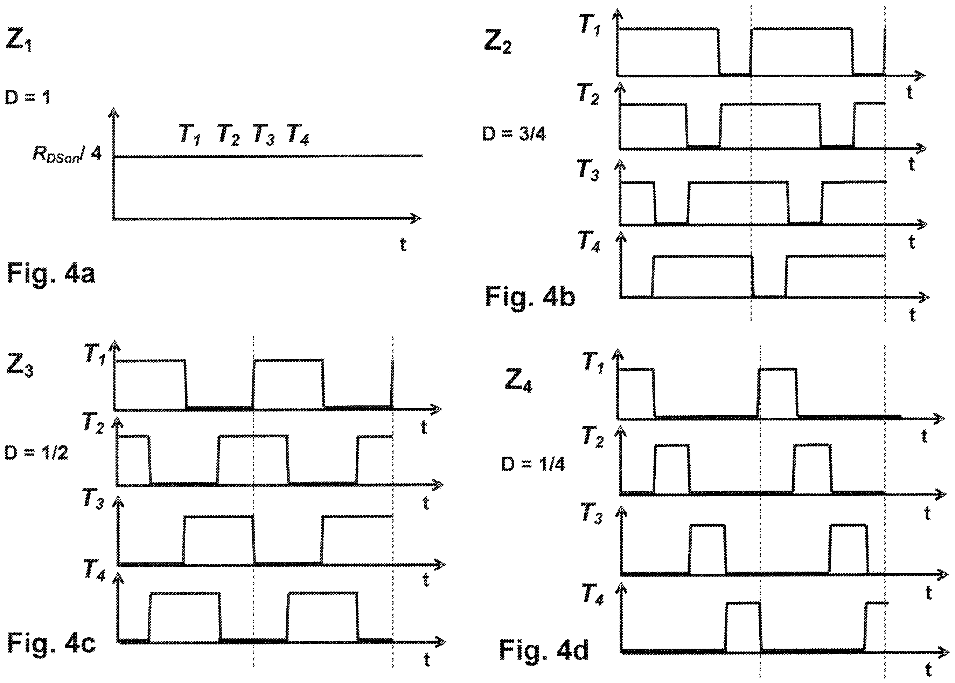

Les **Figures 4a, 4b, 4c et 4d** montrent les signaux de commande des transistors de puissance constituant cet élément résistif dans le mode préféré de réalisation du système de stabilisation d'une tension d'alimentation d'un réseau électrique de bord d'un véhicule automobile selon l'invention montré sur la **Figure 3****.**

### DESCRIPTION DES MODES DE REALISATION PREFERES DE L'INVENTION.

Le procédé de stabilisation d'une tension d'alimentation d'un réseau électrique de bord d'un véhicule automobile selon l'invention est montré dans son principe sur les **Figures 1a et 1b****.**

Ce procédé est mis en oeuvre par un système de stabilisation 1 tel que montré sur la **Figure 3** dans un réseau électrique de bord 2, dont la **Figure 2** est une représentation simplifiée.

Une batterie 3 alimente ce réseau 2 auquel est relié un démarreur électrique 4, apte à être accouplé mécaniquement au moteur thermique du véhicule au moment du lancement de celui-ci.

Diverses autres charges électriques 5 sont habituellement reliées au réseau de bord 2.

Ce sont ces charges électriques 5 qui peuvent avoir un fonctionnement perturbé par la chute de tension de la batterie 3 au moment du démarrage.

Le procédé de stabilisation 1 selon l'invention repose sur l'introduction dans le circuit d'alimentation du démarreur 4 d'un élément résistif 6 présentant un ensemble discret de valeurs prédéterminées de résistance.

Dans l'exemple représenté sur la **Figure 1b****,** il existe quatre valeurs prédéterminées de résistance: R, R/2, R/3 et R/4.

On note que ces valeurs prédéterminées sont proportionnelles aux quatre premiers termes de la série harmonique 1, 1/2, 1/3 et 1/4, le coefficient de proportionnalité étant R.

La valeur de résistance qui est choisie dépend de la chute de tension comme le montre bien la **Figure 1a****,** à mettre en correspondance avec la **Figure 1b**.

Quand la tension U_{bat} de la batterie 3 reste dans une première zone Z₁ pendant un premier intervalle de temp Δt₁ au début du démarrage et revient dans cette première zone Z₁ quand le moteur thermique a pris son régime, le procédé selon l'invention consiste à choisir la plus faible valeur R/4.

Quand la tension U_{bat} chute dans une deuxième zone Z₂ pendant un deuxième intervalle de temps Δt₂, ou remonte ultérieurement dans cette deuxième zone Z₂, le procédé selon l'invention consiste à choisir une valeur plus élevée R/3.

Dans une troisième zone Z₃, pendant un troisième intervalle de temps Δt₃, alors que la tension U_{bat} continue de chuter, le procédé selon l'invention consiste à choisir une valeur encore plus élevée R/2.

Au minimum de la tension U_{bat} dans une quatrième zone Z₄, la valeur maximale R est choisie pendant un quatrième intervalle de temps Δt₄.

Comme le montre la **Figure 2****,** une manière de former l'élément résistif 6 présentant ces quatre valeurs prédéterminées R, R/2, R/3 et R/4 est de le former soit par un seul composant résistif 7 de résistance R, soit par la mise en parallèle de deux à quatre exemplaires identiques de ce composant résistif 7.

Dans une réalisation pratique correspondant à la **Figure 2****,** l'élément résistif 6 est constitué par quatre composants résistifs 7 de résistance R et quatre interrupteurs 8, chacun des composants résistifs 7 étant connecté en série avec chacun des interrupteurs 8 pour former quatre bras connectés en parallèle.

Le procédé selon l'invention tire avantage de la redondance des composants résistifs 7 dans cette configuration, quand tous les composants résistifs 7 ne doivent pas être connectés ensemble pour réaliser la plus faible valeur de résistance, en connectant alternativement les seuls composants résistifs 7 nécessaires.

Par exemple, pour réaliser la valeur la plus élevée R dans la quatrième zone Z₄, un seul composant résistif 7 est nécessaire. Le procédé selon l'invention consiste à connecter alternativement chacun des quatre composants résistifs 7.

Cette caractéristique du procédé selon l'invention est essentielle quand les composants résistifs 7 sont constitués de transistors de puissance 9 fonctionnant en régime saturé, ces transistors étant de préférence de type MOSFET (acronyme de "Metal Oxyde Semiconductor Field Effect Transistor" en anglais, c'est-à-dire "Transistor à Effet de Champ à Semi-conducteur à Oxyde Métallique") présentant une résistance drain-source R_{DS(on)} de quelques mΩ.

En effet, au minimum de tension U_{bat} dans la quatrième zone Z₄ correspond un pic de courant, qui peut atteindre 1000 A, qui doit circuler dans un seul composant résistif 7 constitué par un seul transistor 9.

Les MOSFETs disponibles actuellement ne peuvent pas supporter une telle intensité en continu.

L'alternance des temps de conduction permet de rester dans les limites de leur dissipation thermique.

Dans le mode de réalisation préféré du système de stabilisation 1 selon l'invention montré sur la **Figure 3****,** un microcontrôleur 10 pilote les quatre transistors MOSFET 9 de manière à ce que les résistances R_{DS(on)} des transistors 9 dans l'état passant mises en parallèle présentent les valeurs prédéterminées R_{DS(on)}, R_{DS(on)}/2, R_{DS(on)}/3 ou R_{DS(on)}/4 tout en alternant les temps de conduction.

Les MOSFETs sont de préférence, comme il est montré sur la **Figure 3****,** des MOSFETs canal N insérés entre le démarreur 4 et la masse, supposée correspondre au pôle négatif de la batterie 3, afin de simplifier leur pilotage.

Les **Figures 4a, 4b, 4c et 4d** montrent les signaux de commande *T₁*, *T₂*, *T₃*, *T₄* générés par le microcontrôleur 10 et appliqués sur les grilles des MOSFETs 9.

Si la tension U_{bat} de la batterie 3 est dans la première zone Z₁ **(****Figure 4a****)**, tous les transistors sont passants et le rapport cyclique D des signaux de commande *T₁*, *T₂*, *T₃*, *T₄* est D=1. La résistance équivalente est R_{DS(on)}/4.

Quand la tension U_{bat} chute dans la deuxième zone Z₂ (**Figure 4b**), seulement trois transistors 9 sur quatre sont passants en même temps. Le rapport cyclique D des signaux de commande *T₁, T₂, T₃, T₄* est D=3/4. La résistance équivalente est R_{DS(on)}/3.

Dans la troisième zone Z₃ (**Figure 4c**), seulement deux transistors 9 sur quatre sont passants en même temps. Le rapport cyclique D des signaux de commande *T₁, T₂, T₃, T₄* est D=1/2. La résistance équivalente est R_{DS(on)}/2.

Enfin, dans la quatrième zone Z₄ (**Figure 4d**), un seul transistor 9 sur quatre est passant à la fois. Le rapport cyclique D des signaux de commande *T₁*, *T₂*, *T₃*, *T₄* est D=1/4. La résistance équivalente est R_{DS(on)}/4.

Il est important de noter que, les transistors 9 étant pilotés par un microcontrôleur 10 (ou un microprocesseur), la fréquence et le rapport cyclique D des signaux de commandes *T₁*, *T₂*, *T₃*, *T₄* sont des paramètres qui sont facilement modifiables.

L'homme de métier aura compris que les transistors 9 travaillent en commutation; mais, si l'on considère le courant circulant dans le système de stabilisation 1 selon l'invention, la résistance équivalente R_{equi} de l'élément résistif 6 est toujours continue en dehors des transitions entre les zones Z₁, Z₂, Z₃, Z₄. De ce fait, il n'existe pas de fronts importants en dU_{bat}/dt ou dl_{bat}/dt.

Cela signifie qu'il n'y a pas de problème de CEM.

Comme il va de soi, l'invention ne se limite pas aux seuls modes d'exécution préférentiels décrits ci-dessus.

Notamment, le type de transistors de puissance 9 cité n'est pas limitatif; l'utilisation d'autres éléments à semi-conducteurs susceptibles de réaliser les mêmes fonctions que les MOSFETs 9 ne sortirait pas du cadre de l'invention.

A titre d'exemple, quatre valeurs prédéterminées de résistance ont été citées correspondant à une implémentation par quatre éléments résistifs 7, et en particulier par quatre transistors de puissance 9.

L'homme de métier choisira autant que de besoin un nombre plus grand de composants résistifs 7, ou de transistors de puissance 9, de manière, en alternant les temps de commutation, à répartir le courant circulant dans le démarreur 4 et les contraintes thermiques dans la limite des caractéristiques de chacun de ces composants résistifs 7 ou transistors de puissance 9.

L'invention embrasse toutes les variantes possibles de réalisation dans la limite de l'objet des revendications ci-après.

## Revendications

1. Procédé de stabilisation d'une tension d'alimentation (U_{bat}) d'un réseau électrique de bord (2) d'un véhicule automobile, du type de ceux consistant à limiter une variation de tension d'une batterie (3) alimentant ledit réseau (2) au moment d'un démarrage d'un moteur thermique dudit véhicule au moyen d'un démarreur électrique (4) relié audit réseau (2), qui consiste à connecter avec ladite batterie (3) et ledit démarreur (4) un élément résistif (6) présentant une résistance choisie en fonction de ladite variation de tension parmi un ensemble discret de valeurs prédéterminées (R, R/2, R/3 et R/4), et qui est **caractérisé en ce que** ladite connexion est en série et où lesdites valeurs prédéterminées (R, R/2, R/3 et R/4) sont proportionnelles à un nombre prédéterminé des premiers termes d'une série harmonique (1, 1/2, 1/3 et 1/4).

2. Procédé de stabilisation d'une tension d'alimentation (U_{bat}) d'un réseau électrique de bord (2) d'un véhicule automobile selon la revendication 1, **caractérisé en ce qu'**il consiste à former ledit élément résistif (6) par un composant résistif (7, 9) de résistance élémentaire prédéterminée (R_{DS(on)}) ou par un nombre variable d'exemplaires identiques dudit composant résistif (7, 9) connectés en parallèle, ledit nombre variable étant fonction de ladite variation de tension et au plus égal audit nombre prédéterminé.

3. Procédé de stabilisation d'une tension d'alimentation (U_{bat}) d'un réseau électrique de bord (2) d'un véhicule automobile selon la revendication 1, **caractérisé en ce qu'**il consiste à mettre en oeuvre ledit nombre prédéterminé d'exemplaires identiques d'un composant résistif (7,9) de résistance élémentaire prédéterminée (R_{DS(on)}), et à former ledit élément résistif (6) en connectant alternativement en parallèle un nombre variable desdits exemplaires (7,9), ledit nombre variable étant fonction de ladite variation de tension et au plus égal audit nombre prédéterminé.

4. Système de stabilisation (1) d'une tension d'alimentation (U_{bat}) d'un réseau électrique de bord (2) d'un véhicule automobile, du type de ceux limitant une variation de tension d'une batterie (3) alimentant ledit réseau (2) au moment d'un démarrage d'un moteur thermique dudit véhicule au moyen d'un démarreur électrique (4) relié audit réseau (2) et apte à la mise en oeuvre du procédé selon l'une quelconque des revendications 1 à 3 précédentes, qui comprend un élément résistif (6) connecté avec ladite batterie (3) et ledit démarreur (4) et présentant une résistance variant par pas (R, R/2, R/3 et R/4) en fonction de ladite variation de tension, **caractérisé en ce que** ladite connexion est en série et lesdites valeurs prédéterminées sont proportionnelles à un nombre prédéterminé des premiers termes d'une série harmonique (1, 1/2, 1/3 et 1/4).

5. Système de stabilisation (1) d'une tension d'alimentation (U_{bat}) d'un réseau électrique de bord (2) d'un véhicule automobile selon la revendication 4, **caractérisé en ce que** ledit élément résistif (6) est constitué de plusieurs composants résistifs identiques (7, 9) et de plusieurs interrupteurs(8, 9), chacun desdits composants résistifs (7, 9) étant connecté en série avec chacun desdits interrupteurs (8, 9) en formant un nombre prédéterminé de bras connectés en parallèle.

6. Système de stabilisation (1) d'une tension d'alimentation (U_{bat}) d'un réseau électrique de bord d'un véhicule automobile selon la revendication 5, **caractérisé en ce qu'**il comprend en outre des moyens de commande (10) desdits interrupteurs (8) en fonction de ladite variation de tension.

7. Système de stabilisation (1) d'une tension d'alimentation (U_{bat}) d'un réseau électrique de bord (2) d'un véhicule automobile selon la revendication 6, **caractérisé en ce que** lesdits bras sont formés par des transistors de puissance (9) fonctionnant en commutation et pilotés par lesdits moyens de commande (10).

8. Système de stabilisation (1) d'une tension d'alimentation (U_{bat}) d'un réseau électrique de bord (2) d'un véhicule automobile selon la revendication 7, **caractérisé en ce que** lesdits moyens de commande (10) génèrent des signaux de commande *(T₁, T₂, T₃, T₄)* présentant des rapports cycliques (D) multiples de l'inverse dudit nombre prédéterminé en fonction de ladite variation de tension.

9. Démarreur de véhicule automobile, **caractérisé en ce qu'**il comporte un système de stabilisation (1) d'une tension d'alimentation (U_{bat}) d'un réseau électrique de bord (2) selon l'une quelconque des revendications 4 à 8 intégré.

## Patentansprüche

1. Verfahren zur Stabilisierung einer Versorgungsspannung (U_{bat}) eines elektrischen Bordnetzes (2) eines Automobilfahrzeugs vom Typ jener, die darin bestehen, eine Spannungsvariation einer Batterie (3) zu begrenzen, die das Netz (2) im Moment eines Starts eines Verbrennungsmotors des Fahrzeugs mittels eines elektrischen Starters (4) versorgt, der mit dem Netz (2) verbunden ist, welches daraus besteht, mit der Batterie (3) und dem Starter (4) ein Widerstandselement (6) zu verbinden, das einen Widerstand aufweist, der als Funktion der Spannungsvariation unter einem diskreten Satz vorherbestimmter Werte (R, R/2, R/3 und R/4) ausgewählt wird, und welches **dadurch gekennzeichnet ist, dass** die Verbindung in Serie erfolgt und wo die vorherbestimmten Werte (R, R/2, R/3 und R/4) proportional sind zu einer vorherbestimmten Anzahl erster Terme einer harmonischen Serie (1, 1/2, 1/3 und 1/4).

2. Verfahren zur Stabilisierung einer Versorgungsspannung (U_{bat}) eines elektrischen Bordnetzes (2) eines Automobilfahrzeugs nach Anspruch 1, **dadurch gekennzeichnet, dass** es darin besteht, das Widerstandselement (6) durch eine Widerstandskomponente (7, 9) mit vorherbestimmtem elementaren Widerstand (R_{DS(on)}) oder durch eine variable Anzahl identischer Exemplare der Widerstandskomponente (7, 9), die parallelgeschaltet sind, zu bilden, wobei die variable Anzahl eine Funktion der Spannungsvariation und höchstens gleich der vorherbestimmten Anzahl ist.

3. Verfahren zur Stabilisierung einer Versorgungsspannung (U_{bat}) eines elektrischen Bordnetzes (2) eines Automobilfahrzeugs nach Anspruch 1, **dadurch gekennzeichnet, dass** es darin besteht, die vorherbestimmte Anzahl identischer Exemplare einer Widerstandskomponente (7, 9) mit vorherbestimmtem elementaren Widerstand (R_{DS(on)}) zu realisieren, und das Widerstandselement (6) zu bilden, indem alternativ eine variable Anzahl der Exemplare (7, 9) parallelgeschaltet wird, wobei die variable Anzahl eine Funktion der Spannungsvariation und höchstens gleich der vorherbestimmten Anzahl ist.

4. System (1) zur Stabilisierung einer Versorgungsspannung (U_{bat}) eines elektrischen Bordnetzes (2) eines Automobilfahrzeugs vom Typ jener, welche eine Spannungsvariation einer Batterie (3) begrenzen, die das Netz (2) im Moment eines Starts eines Verbrennungsmotors des Fahrzeugs mittels eines elektrischen Starters (4) versorgt, der mit dem Netz (2) verbunden ist, und geeignet, das Verfahren nach einem der vorhergehenden Ansprüche 1 bis 3 durchzuführen,
welches ein Widerstandselement (6) umfasst, das mit der Batterie (3) und dem Starter (4) verbunden ist und einen schrittweise variierenden Widerstand (R, R/2, R/3 und R/4) als Funktion der Spannungsvariation aufweist, **dadurch gekennzeichnet, dass** die Verbindung in Serie erfolgt und die vorherbestimmten Werte proportional sind zu einer vorherbestimmten Anzahl erster Terme einer harmonischen Serie (1, 1/2, 1/3 und 1/4).

5. System (1) zur Stabilisierung einer Versorgungsspannung (U_{bat}) eines elektrischen Bordnetzes (2) eines Automobilfahrzeugs nach Anspruch 4, **dadurch gekennzeichnet, dass** das Widerstandselement (6) aus mehreren identischen Widerstandskomponenten (7, 9) und mehreren Unterbrechern (8, 9) besteht, wobei jede der Widerstandskomponenten (7, 9) mit jedem der Unterbrecher (8, 9) in Serie verbunden ist, indem eine vorherbestimmte Anzahl von parallel geschalteten Armen gebildet wird.

6. System (1) zur Stabilisierung einer Versorgungsspannung (U_{bat}) eines elektrischen Bordnetzes eines Automobilfahrzeugs nach Anspruch 5, **dadurch gekennzeichnet, dass** es außerdem Mittel (10) zum Steuern der Unterbrecher (8) als Funktion der Spannungsvariation umfasst.

7. System (1) zur Stabilisierung einer Versorgungsspannung (U_{bat}) eines elektrischen Bordnetzes (2) eines Automobilfahrzeugs nach Anspruch 6, **dadurch gekennzeichnet, dass** die Arme durch Leistungstransistoren (9) gebildet sind, die durch Umschalten arbeiten und von den Steuermitteln (10) gesteuert werden.

8. System (1) zur Stabilisierung einer Versorgungsspannung (U_{bat}) eines elektrischen Bordnetzes (2) eines Automobilfahrzeugs nach Anspruch 7, **dadurch gekennzeichnet, dass** die Steuermittel (10) Steuersignale (T₁, T₂, T₃, T₄) generieren, die mehrere cyclische Verhältnisse (D) des reziproken Werts der vorherbestimmten Anzahl als Funktion der Spannungsvariation aufweisen.

9. Starter eines Automobilfahrzeugs, **dadurch gekennzeichnet, dass** er ein integriertes System (1) zur Stabilisierung einer Versorgungsspannung (U_{bat}) eines elektrischen Bordnetzes (2) nach einem der Ansprüche 4 bis 8 umfasst.

## Claims

1. Method for stabilizing a supply voltage (U_{bat}) of an on-board electrical network (2) of a motor vehicle, of the kind consisting in limiting a voltage variation of a battery (3) supplying to said network (2) at the instant when a combustion engine of said vehicle is started by means of an electric starter (4) linked to said network (2), which method consists in connecting, to said battery (3) and said starter (4), a resistive element (6) having a resistance that is chosen, depending on said voltage variation, from a discrete set of predetermined values (R, R/2, R/3 and R/4), and which method is **characterized in that** said connection is in series and where said predetermined values (R, R/2, R/3 and R/4) are proportional to a predetermined number of the first terms of a harmonic series (1, 1/2, 1/3 and 1/4).

2. Method for stabilizing a supply voltage (U_{bat}) of an on-board electrical network (2) of a motor vehicle according to Claim 1, **characterized in that** it consists in forming said resistive element (6) from a resistive component (7, 9) of predetermined elementary resistance (R_{DS(on)}) or from a variable number of identical copies of said resistive component (7, 9) that are connected in parallel, said variable number depending on said voltage variation and being at most equal to said predetermined number.

3. Method for stabilizing a supply voltage (U_{bat}) of an on-board electrical network (2) of a motor vehicle according to Claim 1, **characterized in that** it consists in implementing said predetermined number of identical copies of a resistive component (7, 9) of predetermined elementary resistance (R_{DS(on)}), and in forming said resistive element (6) by connecting, alternately in parallel, a variable number of said copies (7, 9), said variable number depending on said voltage variation and being at most equal to said predetermined number.

4. System (1) for stabilizing a supply voltage (U_{bat}) of an on-board electrical network (2) of a motor vehicle, of the kind limiting a voltage variation of a battery (3) supplying to said network (2) at the instant when a combustion engine of said vehicle is started by means of an electric starter (4) linked to said network (2) and able to implement the method according to any one of the preceding Claims 1 to 3, which system comprises a resistive element (6) connected to said battery (3) and said starter (4) and having an incrementally varying resistance (R, R/2, R/3 and R/4) depending on said voltage variation, **characterized in that** said connection is in series and said predetermined values are proportional to a predetermined number of the first terms of a harmonic series (1, 1/2, 1/3 and 1/4).

5. System (1) for stabilizing a supply voltage (U_{bat}) of an on-board electrical network (2) of a motor vehicle according to Claim 4, **characterized in that** said resistive element (6) is formed of a plurality of identical resistive components (7, 9) and of a plurality of switches (8, 9), each of said resistive components (7, 9) being connected in series with each of said switches (8, 9), forming a predetermined number of arms that are connected in parallel.

6. System (1) for stabilizing a supply voltage (U_{bat}) of an on-board electrical network of a motor vehicle according to Claim 5, **characterized in that** it furthermore comprises means (10) for controlling said switches (8) depending on said voltage variation.

7. System (1) for stabilizing a supply voltage (U_{bat}) of an on-board electrical network (2) of a motor vehicle according to Claim 6, **characterized in that** said arms are formed by power transistors (9) operating in a switching mode and driven by said control means (10).

8. System (1) for stabilizing a supply voltage (U_{bat}) of an on-board electrical network (2) of a motor vehicle according to Claim 7, **characterized in that** said control means (10) generate control signals (*T₁, T₂, T₃, T₄*) having duty cycles (D) that are multiples of the reciprocal of said predetermined number depending on said voltage variation.

9. Motor vehicle starter, **characterized in that** it includes an integrated system (1) for stabilizing a supply voltage (U_{bat}) of an on-board electrical network (2) according to any one of Claims 4 to 8.
